# EUROPÄISCHE PATENTSCHRIFT

(11) **EP 0 888 669 B1**
(45) Veröffentlichungstag und Bekanntmachung des Hinweises auf die Patenterteilung: **12.01.2000**
(21) Anmeldenummer: 97919276.2
(22) Anmeldetag: 18.03.1997
(51) Int. Cl.: H02P 3/06, H02K 1/14, H02K 23/02

(54) **REIHENSCHLUSSMOTOR, INSBESONDERE UNIVERSALMOTOR, MIT EINER BREMSEINRICHTUNG**
SERIES MOTOR, IN PARTICULAR UNIVERSAL MOTOR, WITH BRAKING MEANS
MOTEUR SERIE, NOTAMMENT MOTEUR UNIVERSEL, POURVU D'UN DISPOSITIF DE FREINAGE

(30) Priorität: 22.03.1996 DE 19611323; 09.09.1996 DE 19636519
(43) Veröffentlichungstag der Anmeldung: 07.01.1999
(73) Patentinhaber: C. & E. FEIN GMBH & CO., D-70176 Stuttgart (DE)
(72) Erfinder: Rottmerhusen, Hans Hermann, 25782 Tellingstedt (DE)
(74) Vertreter: Gahlert, Stefan, Dr.-Ing.
(86) Internationale Anmeldenummer: DE9700546
(87) Internationale Veröffentlichungsnummer: WO9736367

(56) Entgegenhaltungen:
- EP-A- 0 730 334
- DE-A- 3 929 556
- DE-A- 4 307 357
- FR-A- 1 351 925

## Beschreibung

Die Erfindung betrifft einen wechselstromgespeisten Reihenschlußmotor, insbesondere einen Universalmotor, mit einer vorbestimmten ausgeprägten Drehrichtung, mit einer Bremseinrichtung, mit einem eine Feldwicklung aufweisenden Stator mit einer geometrisch neutralen Zone und mit einem rotierenden, über einen Kommutator und Bürsten gespeisten, ein Ankerquerfeld hervorrufenden Anker, wobei der Stator aus einem geblechten Polpaket mit magnetischem Rückschlußteil und ausgeprägten, sich jeweils aus zwei ersten und zweiten ungleich großen Feldpolteilen zusammensetzenden Feldpolen besteht, die luftspaltseitig in Polhörner auslaufen, wobei der erste Feldpolteil in bezug auf die Drehrichtung des Ankers an der ablaufenden Seite des Feldpols und der zweite Feldpolteil in bezug auf die Drehrichtung des Ankers an der auflaufenden Seite des Feldpols angeordnet ist, wobei die Feldwicklung jedes Feldpoles aus jeweils einer Feldspule, die den größeren Feldpolteil umschlingt, und einer Feldzusatzspule besteht, die den ersten und den zweiten Feldpolteil umschlingt, und wobei die Bremseinrichtung einen zweipoligen Umschalter mit mindestens zwei Umschaltgliedern aufweist, der zum Umschalten vom Motorbetrieb in den Bremsbetrieb mit der Feldwicklung zusammenwirkt, mit dem während des Motorbetriebes die Feldzusatzspule und die Feldspule mit dem Anker in Reihe geschaltet und mit einem Netzanschluß verbunden werden.

Ein derartiger Reihenschlußmotor ist aus der DE-A-39 29 556 bekannt.

Der bekannte Wechselstrommotor beinhaltet einen Ständer mit Polanordnungen aus jeweils mehreren Polteilen, wobei die Polanordnungen jeweils aus zwei ungleichen Polteilen bestehen, die jeweils von einer Wicklung umschlungen werden. Dabei ist der kleinere Polteil zur ablaufenden Seite der Feldanordnung angeordnet. Während des Motorbetriebes bilden die Polteile der jeweiligen Polanordnungen durch die Wicklungen gleichnamige Polfelder, und während des Bremsbetriebes dient der kleinere Polteil als Wendepol, und der große Polteil dient zur Felderregung.

Eine derartige Gestaltung des Polpaketes hat den Nachteil, daß die zwei separaten Wicklungen schwierig in der Feldpolmitte unterzubringen sind.

Gemäß einer Abwandlung dieser Ausführung sind die Polteile der Polanordnungen so gestaltet, daß der größere Polteil von einer Wicklung umschlungen wird und der kleinere Polteil an der ablaufenden Seite, sowie der größere Polteil an der auflaufenden Seite von einer weiteren Wicklung umschlungen werden. Während des Motorbetriebes bilden auch hier die Polteile der jeweiligen Polanordnungen durch die Wicklungen gleichnamige Polfelder, wohingegen während des Bremsbetriebes der kleinere Polteil an der ablaufenden Seite der Polanordnungen als Wendepol dient, indem die Wicklung des Polteils umgepolt wird, so daß sich die Felder der Wicklungen überlagern, wodurch jeweils ein Wendefeld an der ablaufenden Seite und ein Erregerfeld an der auflaufenden Seite gebildet wird. Durch die Verschaltung der Feldwicklungsteile mit dem Anker während des Motorbetriebes wird das Feld der Feldpole zur auflaufenden Seite der Feldpole verstärkt.

Eine derartige Auslegung des Polpaketes hat den Nachteil, daß durch die Überlagerung der Felder der Wicklungen während des Bremsbetriebes eine sichere Selbsterregung und somit eine elektrodynamische Bremsung des Motors nicht unbedingt gewährleistet ist. Außerdem ist die Kommutierung sowohl während des Motorbetriebes durch die Feldverstärkung zur auflaufenden Seite der Feldpole als auch während des Bremsbetriebes durch die Überlagerung der Felder der Wicklungen nicht ausreichend, es sei denn, das Ankerquerfeld wird weiter zur ablaufenden Seite der Polanordnungen hin ausgerichtet, wodurch sich jedoch der Wirkungsgrad reduzieren würde.

Von Reihenschlußmotoren, insbesondere Universalmotoren, die bei Elektrogeräten und Elektrohandwerkzeugen zur Anwendung kommen, wird eine hohe Leistungsdichte erwartet, womit bei einem geringen Motorengewicht eine hohe Leistungsaufnahme bei einem möglichst hohen Wirkungsgrad zu erzielen ist.
Daher müssen solche Motoren mit einer Innendurchzugsbelüftung ausgestattet sein. Aus diesen Gründen ist für eine gute Kommutierung die Anordnung von Wendepolen am Polpaket schwer zu realisieren.
Um eine ausreichende Kommutierung bei solchen Universalmotoren zu erzielen, wird daher das Ankerquerfeld zur ablaufenden Kante der Feldpole ausgerichtet, wobei die Bürstenverziehung bis zu 45° erfolgt. Nachteilig bei einer solchen Bürstenverziehung ist es, daß hierdurch sehr hohe Leerlaufdrehzahlen verursacht werden, wodurch die Leistungsaufnahme des Motors entsprechend begrenzt wird und der Motor durch eine Kurzschlußbremsung bei einer ausreichenden Kommutierung schwierig abzubremsen ist.

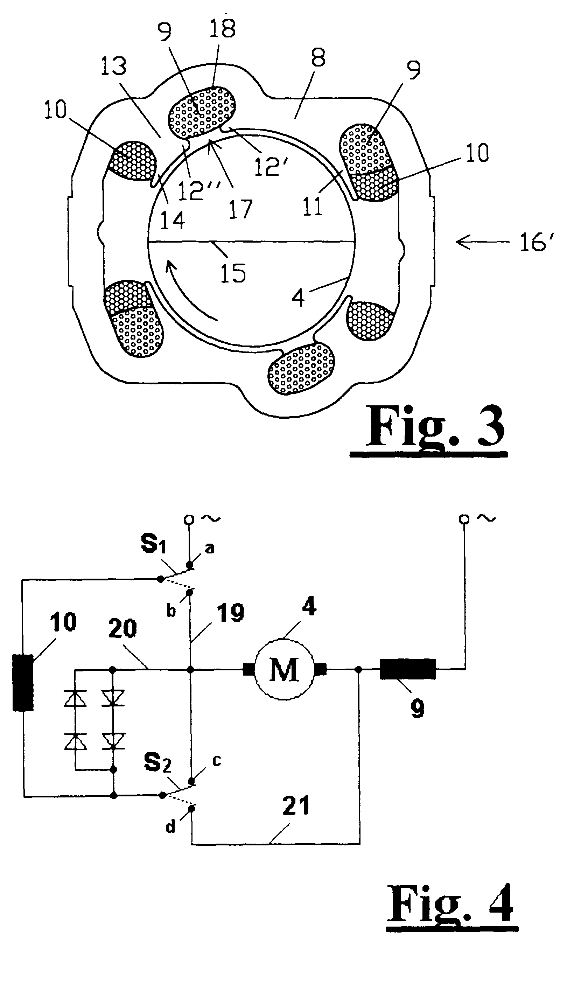

Zur Verbesserung einer ausreichenden Kommutierung bei elektrischen Maschinen ohne Wendepole ist es aus der DE-PS 235 089 bekannt, die Pole am Ständer mehrteilig auszulegen. Bei dieser Anordnung der mehrteiligen Pole am Ständer betrifft es Gleichstrommaschinen und Gleichstrommotoren, bei denen durch einfaches Verändern des Erregerstroms bzw. eines Teiles desselben eine veränderliche elektromotorische Kraft bzw. eine veränderliche Geschwindigkeit ohne Funkenbildung am Kollektor erzielt werden soll, indem die Magnetwicklungen am Ständer übereinander so angeordnet sind, daß ihre Achsen nicht zusammenfallen. Fig. 3 der DE-PS 235 089 veranschaulicht eine Anordnung, bei der die beiden Wicklungen A und B ungleiche Oberflächen besitzen und an einer Seite übereinander liegen, und diese Anordnung ist in Fig. 4 derselben Schrift in Verbindung mit einem zweipoligen Motor veranschaulicht, der auch als Dynamo arbeiten kann. Das Erregersystem ist ein zusammengesetztes, indem die Wicklungen m, m und n, n den Nebenerregungskreis bilden, während die Wicklungen p, p und q, q in Reihe mit dem Anker liegen. Eine elektrische Maschine bzw. ein Elektromotor dieser Bauart kann auch ausschließlich Reihenwicklungen am Ständer besitzen. Für im Handeinsatz verwendete Elektrogeräte bzw. Elektrowerkzeuge kommt der Einsatz solcher Motoren unter dem Gesichtspunkt des Leistungsgewichts des Motors nicht in Betracht, da das Motorengewicht zur Leistungsaufnahme viel zu hoch ist, und außerdem geht keine Lösung für eine Abbremsung des Motors aus dieser Patentschrift hervor.

Aus der DE 43 07 357 A1 ist ein Reihenschlußmotor, insbesondere Universalmotor, mit einer Bremseinrichtung bekannt. Dieser Motor besteht aus einem geblechten Polpaket, dessen Polschuhe jeweils aus zwei ungleichen Polteilen besteht und für eine vorbestimmte, ausgeprägte Drehrichtung des Motors gedacht ist. Jeder Polschuh weist eine Feldwicklung und eine Zusatzwicklung auf, wobei die Feldwicklung jeweils den gesamten Polschuh umgreift, während die Zusatzwicklung auf der ablaufenden Seite des Polschuhs sowie in einer eigenen Nut in Richtung Polmitte angeordnet ist. Zur Umschaltung zwischen Motor- und Bremsbetrieb ist ein mehrpoliger Umschalter vorgesehen. Durch die Anordnung und wechselweise Schaltung von Feld- und Zusatzwicklung wird erreicht, daß der resultierende Erregerfeldvektor immer senkrecht zum Feld der kommutierenden Spule des Ankerkreises steht. Die Feldwicklung wird aber nur während des Motorbetriebes genutzt, während die Zusatzwicklung ausschließlich zum Bremsen verwendet wird.

Aus der DE-OS 15 63 022 ist ein Ständer für Gleichstrommaschinen bekannt, bei dem die Feldpole des geblechten Polpaketes aus drei ungleichen Feldpolteilen bestehen. Diese setzen sich zusammen aus einem breiten Hauptpol mit Polschuh und Polhörnern, der von einer Wicklung umgriffen wird, sowie beiderseitig des Hauptpols aus zwei spiegelsymmetrischen Nebenpolen, deren Polschuhe nur auf der jeweils dem Hauptpol abgewandten Seite in einem Polhorn enden, wobei die beiden Nebenpole von einer zweiten Wicklung gemeinsam umgriffen werden. Die beiden Wicklungen dienen gemeinsam als Feldwicklung und sind deshalb fest zusammen geschaltet. Außerdem ist die Anordnung von Haupt- und Nebenpolen symmetrisch, d.h. das Polpaket kann für beide Laufrichtungen gleichermaßen verwendet werden. Auch sind keine Angaben zum elektrischen Bremsen eines mit diesem Polpaket ausgerüsteten Motors zu entnehmen.

Aus der US 3 697 842 ist ein geblechtes Polpaket für einen Spaltmotor bekannt, das für eine Vorzugslaufrichtung ausgebildet ist. Das Polpaket besteht aus einem breiten Hauptpol mit Polschuhen und beidseitigen Polhörnern sowie aus einem an der auflaufenden Seite des Hauptpoles angeordneten Nebenpol, dessen Polschuh nur an der auflaufenden Seite in einem Polhorn endet. Dabei wird der Hauptpol von einer Betriebswicklung sowie Haupt- und Nebenpol gemeinsam von einer Anlaufwicklung umgriffen.

Es ist bekannt, Reihenschlußmotoren dadurch abzubremsen, daß das Feld oder der Anker des Motors mittels eines Umschalters umgepolt und der Motor kurzgeschlossen wird und somit wie ein Generator wirkt. Um hierbei eine gute Kommutierung sowohl während der Betriebsphase als auch während der Abbremsphase zu erzielen, ist die Anordnung von Wendepolen besonders vorteilhaft. In der Patentschrift EP 0 471 038 B1 ist die Anordnung der Wendepole bei solcherart abgebremsten Motoren beschrieben.
Die Anordnung von Wendepolen bei kleinen durchzugsbelüfteten Universalmotoren mit einer hohen Leistungsdichte ist technisch kaum durchführbar. Zur Abbremsung von Universalmotoren kommen in bekannter Weise daher elektronische Einrichtungen zur Anwendung, wie sie beispielsweise aus der DE 42 40 972 A 1, der DE 38 02 419 A 1 oder der DE 36 36 555 A 1 bekannt sind. Solche elektronischen Einrichtungen, die eine kontrollierte Abbremsung gewährleisten sollen, sind aber nicht absolut betriebssicher. Bei einem Defekt der Elektronik erfolgt entweder keine Abbremsung, oder der Motor wird unmittelbar kurzgeschlossen, und außerdem ist die Kommutierung bei solchen elektronischen Einrichtungen unbefriedigend.

Die Erfindung beruht auf dem Gedanken, die geschilderten Kommutierungsprobleme - im besonderen bei abzubremsenden Universalmotoren - aufzuheben.
Daher liegt der Erfindung die Aufgabe zugrunde, einen Reihenschlußmotor in Verbindung mit einer Bremsschaltung zu schaffen, welcher sowohl während der Betriebsphase als auch während der Abbremsphase eine ausreichende Kommutierung aufweist, ohne daß hierfür Wendepole erforderlich sind oder eine Bürstenverstellung vorgesehen wird.

Diese Aufgabe wird bei einem Reihenschlußmotor der gattungsbildenden Art durch die kennzeichnenden Merkmale des Patentanspruchs 1 gelöst.
Weitere Ausgestaltungen der Erfindung sind den übrigen Ansprüchen und der Beschreibung zu entnehmen.

Die besonderen Vorteile des erfindungsgemäßen Blechschnitts für das Polpaket des Reihenschlußmotors in Verbindung mit Schaltungsanordnungen zum Abbremsen des Motors liegen darin, daß hiermit bei einer elektrodynamischen Bremsung des Motors nach dem Prinzip der Selbsterregung während des Umschaltens vom Motorbetrieb in den Bremsbetrieb die Bremsung selbsttätig eingeleitet wird und eine entsprechende gute Kommutierung sowohl während der Betriebsphase als auch während der Abbremsphase des Motors erzielt wird. Hierbei ist eine hohe Betriebssicherheit des Bremsvorgangs gewährleistet, wobei ein üblicher Durchzugsbelüftungsraum in dem Bereich der geometrisch neutralen Zone vorhanden ist. Somit wird eine standardgemäße Leistungsaufnahme und ein standardgemäßer Wirkungsgrad erzielt.

Die Erfindung wird nachstehend anhand der in den Figuren dargestellten Ausführungsbeispiele näher erläutert.

Dabei zeigen:
- Fig.1: einen standardgemäßen Blechschnitt des Polpakets für einen Universalmotor,
- Fig.2: einen erfindungsgemäßen Blechschnitt des Polpakets für einen gebremsten Universalmotor,
- Fig.3: einen zu Fig. 2 alternativen Blechschnitt,
- Fig.4,5: Bremsschaltungen für die erfindungsgemäßen Blechschnitte des Polpakets,
- Fig.6: ein Diagramm über den Stromverlauf während der Abbremsphase des Universalmotors.

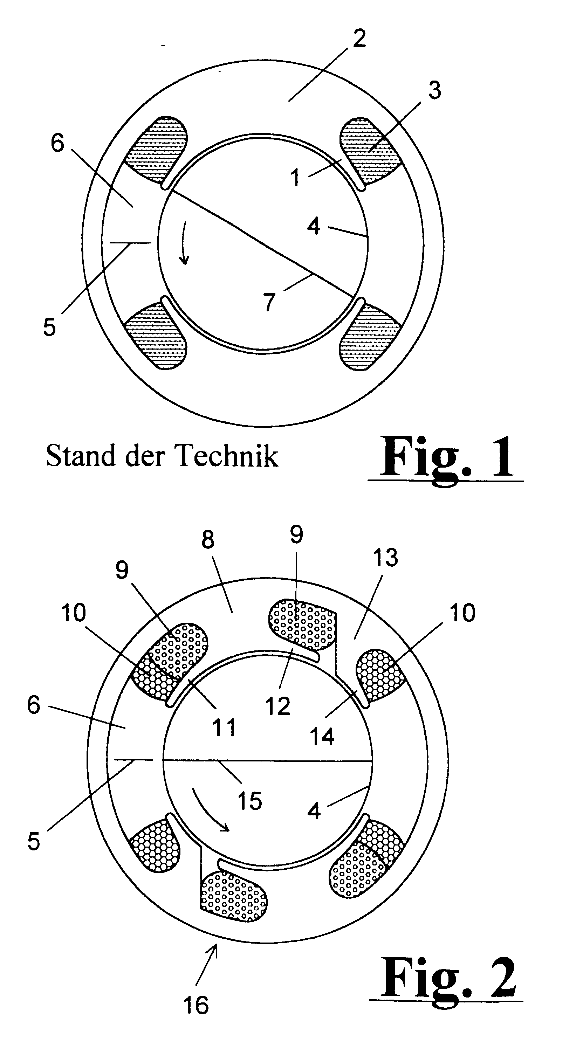

Elektrogeräte und insbesondere Elektrohandwerkzeuge sind üblicherweise mit einem Universalmotor ausgestattet, da mit einem Universalmotor eine hohe Leistungsdichte zu erzielen ist. Einen standardgemäßen Blechschnitt des Polpakets eines solchen Universalmotors zeigt Fig. 1. Hinter den Polhörnern 1 der Feldpole 2 wird die Feldwicklung 3 angeordnet. Der Anker 4 und die Feldwicklung werden durch eine Durchzugsbelüftung gekühlt. Für die Kühlung des Motors ist daher in dem Bereich der geometrisch neutralen Zone 5 ein entsprechender Raum 6 vorgesehen. Um eine ausreichende Kommutierung bei Nennbetrieb des Motors zu erreichen, werden die Bürsten entsprechend verzogen, und somit wird das Ankerquerfeld 7 aus der geometrisch neutralen Zone 5 hin zur ablaufenden Kante der Feldpole 2 verlegt. Soll nun ein derartig ausgelegter Universalmotor abgebremst werden, indem der Anker oder die Feldwicklung mittels eines Umschalters umgepolt und der Motor kurzgeschlossen wird, sind hierfür Maßnahmen zur Regulierung des Bremsstroms erforderlich. Überwiegend kommen für diese Aufgaben elektronische Steuereinrichtungen zur Anwendung. Die Kommutierung während der Abbremsphase des Motors bleibt aber mangelhaft, wenn keine Bürstenverstellung vorgenommen wird oder keine Wendepole vorhanden sind. Außerdem ist der Bremsvorgang nicht optimal. Weiterhin wird durch die Bürstenverziehung eine hohe Leerlaufdrehzahl verursacht, und sie verursacht auch einen harten Anlauf des Motors. Für einen Universalmotor ist es wünschenswert, wenn er die Eigenschaften eines sanften Anlaufs und ein steifes Drehzahlverhalten aufweist, wobei er noch die Eigenschaften einer sanften Schnellabbremsung besitzen sollte, um solche Universalmotoren besonders bei mit gefährlichen Werkzeugen bestückten handgeführten Elektrowerkzeugen, beispielsweise bei einem Winkelschleifer, verwenden zu können. Ein solcher Universalmotor soll aber die Anforderung einer ausreichenden Kommutierung sowohl während der Betriebsphase als auch während der Abbremsphase erfüllen, wobei eine ausreichende Durchzugsbelüftung in dem Bereich der geometrisch neutralen Zone und ein standardgemäßer Wirkungsgrad sowie eine standardgemäße Leistungsaufnahme gewährleistet sein muß.
Fig. 2 zeigt einen erfindungsgemäßen Blechschnitt des Ständers eines Reihenschlußmotors, der in Verbindung mit entsprechenden Bremsschaltungen die zuvor aufgeführten Erfordernisse erfüllt.
Der Polaufbau des Polpakets ist nur für eine Drehrichtung des Motors ausgelegt, und es besitzt zwei Feldpolanordnungen aus je zwei ungleich großen Feldpolteilen, wobei der Feldpolteil 8 an der ablaufenden Seite den größeren Polteil der Feldpolanordnungen bildet. Der Feldpolteil 8 an der in Drehrichtung gesehenen ablaufenden Seite besitzt zwei Polhörner 11, 12, und dieser Feldpolteil 8 wird beidseitig von einer Feldspule 9 umschlungen und einseitig an der ablaufenden Seite von einer Feldzusatzspule 10. Daher ist das Polhorn 11 an der ablaufenden Seite derart ausgelegt, daß es sowohl die Feldspule 9 als auch die Feldzusatzspule 10 aufnehmen kann, und das andere Polhorn 12 dieses Feldpolteils 8 ist so ausgelegt, daß es die Feldspule 9 aufnehmen kann. Der Feldpolteil 13 an der auflaufenden Seite wird nur von der Feldzusatzspule 10 einseitig umschlungen, somit besitzt dieser Feldpolteil 13 an der auflaufenden Seite ein entsprechendes Polhorn 14 zur Aufnahme der Feldspule 10. Das Ankerquerfeld 15 kann vorzugsweise zur geometrisch neutralen Zone 5 ausgerichtet sein, hierdurch wird die maximale Anzahl der Spulen des Ankers 4 vom Ständerfeld erfaßt. Die Windungszahl der Feldspule 9 ist derart zu der Windungszahl der Feldzusatzspule 10 ausgelegt, daß bei Nennbetrieb des Motors eine gute Kommutierung gewährleistet ist und somit der maximale Wirkungsgrad des Motors erzielt wird.
Zur maschinellen Einspulung der Feldspule 9 kann es vorteilhaft sein, das Polpaket zweiteilig auszulegen, indem das Polpaket in dem Bereich 16 des Polkerns des Feldpolteils 13 getrennt ist. Nach dem Einspulen der Feldspule 9 werden die Polpaketteile zusammengefügt.

Sollen bandagierte Feldspulen am Ständer angeordnet sein, so müssen die Feldspulen an einem Stück am Ständer eingelegt werden.
Fig. 3 zeigt einen erfindungsgemäßen Blechschnitt des Ständers, der vorteilhaft zur Anordnung bandagierter Feldspulen geeignet ist.
Das Polhorn 12' des Feldpolteils 8 ist hier geringer wie das Polhorn 12 der Fig. 2 ausgeprägt. Zur Einbringung der bandagierten Feldspule 9 am Ständer wird zuerst die eine Spulenseite hinter dem zur geometrisch neutralen Zone weisenden Polhorn 11 des Feldpolteils 8 gelegt, und die andere Spulenseite wird zu der Öffnung 17 der Nute 18 zwischen dem Feldpolteil 8 und dem Feldpolteil 13 geführt und dann entsprechend in die Nute 18 angeordnet. Das Polhorn 12' und der Polhornansatz 12" des Feldpolteils 13 dient zur Fixierung der bandagierten Feldspule 9. Nach der Einbringung der bandagierten Feldspule 9 am Ständer wird die bandagierte Feldzusatzspule 10 in bekannter Weise am Ständer angeordnet.

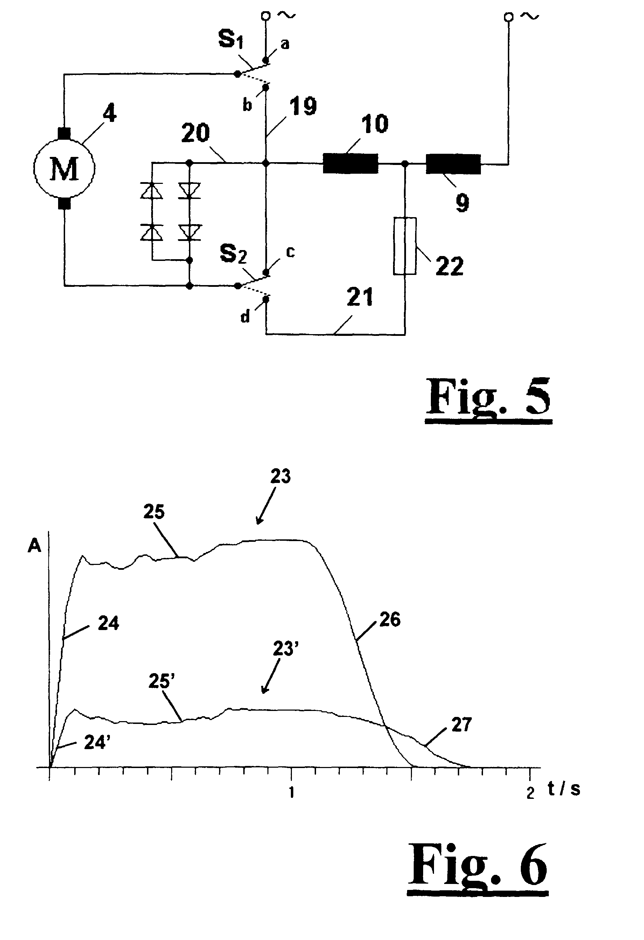

Soll nun ein derartig ausgelegter Reihenschlußmotor durch eine Kurzschlußbremsung bei einer ausreichenden Kommutierung sanft und schnell abgebremst werden, so ist hierfür eine entsprechende Schaltungsanordnung vorzusehen. Fig. 4 und 5 zeigen solche Schaltungsanordnungen.
Fig. 4 zeigt eine Schaltungsanordnung zum netzunabhängigen elektrischen Bremsen eines Reihenschlußmotors mittels eines zweipoligen Umschalters. Die Feldzusatzspule 10 ist zwischen dem ersten und dem zweiten Umschaltglied S 1, S 2 angeordnet. Der Arbeitskontakt a des ersten Umschaltglieds S 1 ist mit einem ersten Netzanschluß und der Ruhekontakt b des ersten Umschaltglieds S 1 ist über eine Brücke 19 mit dem Arbeitskontakt c des zweiten Umschaltglieds S 2 und dem ersten Anschluß des Ankers 4 verbunden, wobei mit der Brükke 19 der erste Anschluß des Strompfads 20 verbunden ist. Der zweite Anschluß des Strompfads 20 ist mit dem zweiten Umschaltglied S 2 verbunden, und der zweite Anschluß des Ankers 4 ist mit dem ersten Anschluß der Feldspule 9 und über eine Kurzschlußbrücke 21 mit dem Ruhekontakt d des zweiten Umschaltglieds S 2 verbunden, während der zweite Anschluß der Feldspule 9 mit einem zweiten Netzanschluß verbunden ist. Im Strompfad 20 befindet sich eine in Wechselrichtung geschaltete Diodenanordnung. Diese Diodenanordnung dient als Spannungsrückstand für die Felderregung während der Bremsbetriebsphase.

Bei der Schaltungsanordnung der Fig. 5 ist der Anker 4 zwischen dem ersten und dem zweiten Umschaltglied S 1, S 2 angeordnet, und die Feldzusatzspule 10 ist mit ihrem ersten Anschluß mit der Brücke 19 verbunden, wobei ihr zweiter Anschluß mit der Feldspule 9 und der Kurzschlußbrücke 21 verbunden ist.
Bei den Schaltungsanordnungen ist die Feldzusatzspule 10 und die Feldspule 9 während der Motorbetriebsphase mit dem Anker 4 in Reihe geschaltet, wobei während der Bremsbetriebsphase nur die Feldzusatzspule 10 über die Kurzschlußbrücke 21 mit dem Anker 4 in Reihe geschaltet ist.

Sollte der Strompfad 20 bei den Schaltungsanordnungen einmal unterbrochen bzw. nichtleitend sein, so wird der Motor unmittelbar kurzgeschlossen und schlagartig abgebremst. Dieser Zustand kann besonders bei handgeführten Elektrowerkzeugen zu Unfällen führen. Um ein unmittelbares Kurzschließen des Motors zu verhindern, kann in der Kurzschlußbrücke 21 eine Sicherung 22 angeordnet werden, die so ausgelegt ist, daß beim Versagen des Strompfades 20 die Sicherung schnell durchschlägt und hierdurch ein schlagartiges Abbremsen des Motors verhindert wird.
Mit der Bremsschaltung der Fig. 4 und der Fig. 5 in Verbindung mit dem entsprechenden Blechschnitt wird eine sanfte Schnellabbremsung des Motors erzielt. Hierbei ist es besonders vorteilhaft, daß das Feld der Feldpolanordnungen an der ablaufenden Seite während der Betriebsphase verstärkt wird, wodurch zur Erreichung einer ausreichenden Kommutierung während der Betriebsphase die Bürsten etwa in dem Bereich der geometrisch neutralen Zone stehen können. Hierdurch reicht eine schwache Erregung der Feldzusatzspule 10 aus, um eine sanfte Schnellabbremsung des Motors zu erzielen. Daher kann der Spannungsrückstand der Diodenanordnung im Strompfad gering sein. In der Regel beträgt der Spannungsrückstand ab 0,7 V aufwärts, und er ist von der Baugröße des Motors abhängig.
Die Praxis hat gezeigt, daß bei einer Bremsschaltung mit einem Strompfad der effektivste Bremsvorgang erzielt wird, wenn das Ankerquerfeld zu dem Bereich der geometrisch neutralen Zone hin ausgerichtet ist.
Der Stromverlauf während des Bremsvorgangs ist mit dem Diagramm der Fig. 6 dargestellt.
Die erste Kurve 23 zeigt den Stromverlauf des Strompfades 20 und die zweite Kurve 23' den Stromverlauf der Feldzusatzspule 10. Während der Bremseinleitung steigt der Bremsstrom in dem Bereich 24, 24' kontinuierlich an und hält sich in dem Hauptbremsbereich 25, 25' etwa konstant, und in dem Bereich 26 des letzten Drittels der Bremszeit beginnt der über den Strompfad 20 fließende Bremsstrom zusammenzubrechen, bis kein Strom mehr über den Strompfad 20 fließt. Der gesamte Bremsstrom fließt nun in dem Bereich 27 kurz vor dem Ankerstillstand direkt über der Feldzusatzspule 10 und den Anker 4, wodurch eine sanfte Schnellabbremsung bis zum Ankerstillstand erzielt wird.

Derartige abbremsbare Universalmotoren kommen zum Beispiel vorzugsweise bei handgeführten Winkelschleifern und Kreissägen zur Anwendung.

## Patentansprüche

1. Wechselstromgespeister Reihenschlußmotor, insbesondere Universalmotor, mit einer vorbestimmten ausgeprägten Drehrichtung, mit einer Bremseinrichtung, mit einem eine Feldwicklung aufweisenden Stator mit einer geometrisch neutralen Zone (5) und mit einem rotierenden, über einen Kommutator und Bürsten gespeisten, ein Ankerquerfeld (15) hervorrufenden Anker (4), wobei der Stator aus einem geblechten Polpaket mit magnetischem Rückschlußteil und ausgeprägter, sich jeweils aus zwei ersten und zweiten ungleich großen Feldpolteilen (8, 13) zusammensetzenden Feldpolen besteht, die luftspaltseitig in Polhörner (11, 12, 14) auslaufen, wobei der erste Feldpolteil (8) in bezug auf die Drehrichtung des Ankers (4) an der ablaufenden Seite des Feldpols und der zweite Feldpolteil (13) in bezug auf die Drehrichtung des Ankers (4) an der auflaufenden Seite des Feldpols angeordnet ist, wobei die Feldwicklung jedes Feldpols aus jeweils einer Feldspule (9), die den größeren Feldpolteil (8) umschlingt, und einer Feldzusatzspule (10) besteht, die den ersten und den zweiten Feldpolteil (8, 13) umschlingt, und wobei die Bremseinrichtung einen zweipoligen Umschalter mit mindestens zwei Umschaltgliedern (S1, S2) aufweist, der zum Umschalten vom Motorbetrieb in den Bremsbetrieb mit der Feldwicklung zusammenwirkt und mit dem während des Motorbetriebes die Feldzusatzspule (10) und die Feldspule (9) mit dem Anker (4) in Reihe geschaltet und mit einem Netzanschluß verbunden werden, dadurch gekennzeichnet, daß der erste größere Feldpolteil (8) in bezug auf die Drehrichtung des Ankers (4) an der ablaufenden Seite des Feldpols und der zweite, kleinere Feldpolteil (13) in bezug auf die Drehrichtung des Ankers (4) an der auflaufenden Seite des Feldpols angeordnet ist, daß durch die Anordnung der Feldspule (9) und der Feldzusatzspule (10) an den Feldpolteilen (8, 13) und die Verschaltung der Feldspule (9) und der Feldzusatzspule (10) mit dem Anker (4) über den Umschalter (S1, S2) während des Motorbetriebs das Feld der Feldpole zur ablaufenden Seite der Feldpole verstärkt wird, und daß während des Bremsbetriebes nur die Feldzusatzspule (10) mit dem Anker (4) zu einem geschlossenen Stromkreis verbunden ist.

2. Wechselstromgespeister Reihenschlußmoor nach Anspruch 1, dadurch gekennzeichnet, daß ein Polhorn (12') des Feldpolteils (8) und ein Polhornansatz (12") des Feldpolteils (13), die zur Öffnung (17) der Nut (18) weisen, zur Fixierung einer bandagierten Feldspule (9) dienen.

3. Wechselstromgespeister Reihenschlußmotor nach Anspruch 1 oder 2, dadurch gekennzeichnet, daß zur Erreichung eines effektiven Bremsvorganges das Ankerquerfeld (15) des Ankers (4) zu dem Bereich der geometrisch neutralen Zone (5) des Polpaketes hin ausgerichtet ist.

4. Wechselstromgespeister Reihenschlußmotor nach einem der Ansprüche 1 bis 3, dadurch gekennzeichnet, daß zur Ausrichtung des Ankerquerfeldes (15) im Bereich der geometrisch neutralen Zone (5) des Polpaketes die Windungszahlen von Feldspule (9) und Feldzusatzspule (10) derart zueinander bemessen sind, daß bei Motorbetrieb und bei Bremsbetrieb eine gute Kommutierung gewährleistet ist.

5. Wechselstromgespeister Reihenschlußmotor nach einem der Ansprüche 1 bis 4, dadurch gekennzeichnet, daß das Polpaket des Stators zweiteilig ausgebildet ist, wobei es in einem Bereich (16) zwischen dem ersten Feldpolteil (8) und dem zweiten Feldpolteil (13) getrennt ist, so daß die beiden Teile des Polpakets nach dem Einspulen der Feldzusatzspule (9) zusammenfügbar sind.

6. Wechselstromgespeister Reihenschlußmotor nach einem der Ansprüche 1 bis 4, dadurch gekennzeichnet, daß das Polpaket des Stators zweiteilig ausgebildet ist, wobei es in einem Bereich (16') der geometrisch neutralen Zone (5) getrennt ist, so daß die beiden Teile des Polpakets nach dem Anordnen der bandagierten Feldspule (9) und Feldzusatzspule (10) zusammenfügbar sind.

7. Wechselstromgespeister Reihenschlußmotor nach einem der Ansprüche 1 bis 6, dadurch gekennzeichnet, daß die Feldzusatzspule (10) mit dem Anker (4) über eine Kurzschlußbrücke (21) und eine Sicherung (22) zu einem geschlossenen Stromkreis verbunden ist.

## Claims

1. A.c.-powered series motor, in particular a universal motor, having a predetermined pronounced direction of rotation, having a braking device, having a stator comprising a field winding and with a geometrically neutral zone (5), and having a rotating armature (4) which is supplied via a commutator and brushes and generates an armature quadrature-axis field (15),
wherein the stator consists of a laminated pole pack with a magnetic return part and pronounced field poles, which are composed in each case of two first and second different-sized field pole parts (8, 13) and at the air gap side taper off into pole horns (11, 12, 14), wherein the first field pole part (8) is disposed in relation to the direction of rotation of the armature (4) at the trailing side of the field pole and the second field pole part (13) is disposed in relation to the direction of rotation of the armature (4) at the leading side of the field pole, wherein the field winding of each field pole comprises in each case a field coil (9), which is wrapped around the larger field pole part (8), and a field booster coil (10), which is wrapped around the first and the second field pole part (8, 13), and wherein the braking device comprises a double-pole double-throw switch having at least two changeover contact elements (S1, S2), which for changing over from motor operation to brake operation cooperates with the field winding and by means of which during motor operation the field booster coil (10) and the field coil (9) are connected in series to the armature (4) and connected to a supply connection, characterized in that the first larger field pole part (8) is disposed in relation to the direction of rotation of the armature (4) at the trailing side of the field pole and the second smaller field pole part (13) is disposed in relation to the direction of rotation of the armature (4) at the leading side of the field pole, that by virtue of the arrangement of the field coil (9) and of the field booster coil (10) on the field pole parts (8, 13) and the connection of the field coil (9) and of the field booster coil (10) to the armature (4) by means of the double-throw switch (S1, S2) during motor operation the field of the field poles at the trailing side of the field poles is strengthened, and that during braking operation only the field booster coil (10) is connected to the armature (4) to form a closed circuit.

2. A.c.-powered series motor according to claim 1, characterized in that a pole horn (12') of the field pole part (8) and a pole horn projection (12") of the field pole part (13), which are directed towards the opening (17) of the slot (18), are used to fix a bandaged field coil (9).

3. A.c.-powered series motor according to claim 1 or 2, characterized in that, to achieve an effective braking operation, the armature quadrature-axis field (15) of the armature (4) is aligned in the direction of the region of the geometrically neutral zone (5) of the pole pack.

4. A.c.-powered series motor according to one of claims 1 to 3, characterized in that, for aligning the armature quadrature-axis field (15) in the region of the geometrically neutral zone (5) of the pole pack, the numbers of the turns of field coil (9) and field booster coil (10) are so dimensioned relative to one another that during motor operation and during brake operation good commutation is guaranteed.

5. A.c.-powered series motor according to one of claims 1 to 4, characterized in that the pole pack of the stator is constructed in two parts in that it is divided in a region (16) between the first field pole part (8) and the second field pole part (13) so that the two parts of the pole pack may be joined together after the field booster coil (9) has been wound in.

6. A.c.-powered series motor according to one of claims 1 to 4, characterized in that the pole pack of the stator is constructed in two parts in that it is divided in a region (16') of the geometrically neutral zone (5) so that the two parts of the pole pack may be joined together after the arrangement of the bandaged field coil (9) and field booster coil (10).

7. A.c.-powered series motor according to one of claims 1 to 6, characterized in that the field booster coil (10) is connected to the armature (4) by a short-circuiting link (21) and a fuse (22) to form a closed circuit.

## Revendications

1. Moteur série alimenté en courant alternatif, notamment moteur universel présentant un sens de rotation caractéristique prédéterminé, comportant un dispositif de freinage, comportant un stator présentant un enroulement inducteur, avec une zone (5) géométriquement neutre et avec un induit (4) tournant, alimenté par un commutateur et des balais et provoquant un champ transversal d'induit (15); le stator étant constitué d'un paquet polaire feuilleté avec une partie de retour magnétique et pales saillants, se composant chacun de deux premières et deuxièmes pièces polaires (8, 13) de tailles différentes, qui se terminent côté entrefer dans des cornes (11, 12, 14), la première pièce polaire (8) étant disposée, par rapport au sens de rotation de l'induit (4), sur le côté de sortie du pale et la deuxième pièce polaire (13) étant disposée, par rapport au sens de rotation de l'induit (4), sur le côté d'entrée du pôle, l'enroulement inducteur de chaque pôle étant constitué d'une bobine inductrice (9), qui entoure la plus grande pièce polaire (8) et d'une bobine inductrice supplémentaire (10), qui entoure la première et la deuxième pièce polaire (8, 13), et le dispositif de freinage comportant un commutateur bipolaire avec au moins deux organes de commutation (S1, S2), qui coopère avec l'enroulement inducteur, pour commuter du mode moteur en mode de freinage et avec lequel la bobine inductrice supplémentaire (10) et la bobine inductrice (9) sont montées en série avec l'induit (4) et sont reliées à un branchement au réseau pendant le mode moteur, caractérisé en ce que la première grande pièce polaire (8) est disposée, par rapport au sens de rotation de l'induit (4), sur le côté de sortie du pale et la deuxième petite pièce polaire (13) est disposée, par rapport au sens de rotation de l'induit (4), sur le côté d'entrée du pôle, en ce que du fait de la disposition de la bobine inductrice (9) et de la bobine inductrice supplémentaire (10) sur les pièces polaires (8, 13) et de la liaison de la bobine inductrice (9) et de la bobine inductrice supplémentaire (10) avec l'induit (4) par le commutateur (S1, S2), le champ des pôles est intensifié vers le côté de sortie des pôles pendant le mode moteur et en ce que seule la bobine inductrice supplémentaire (10) est reliée à l'induit (4) en un circuit fermé, pendant le mode freinage.

2. Moteur série alimenté en courant alternatif selon la revendication 1, caractérisé en ce qu'une corne (12') de la pièce polaire (8) et un appendice de corne (12") de la pièce polaire (13), qui sont dirigés vers l'ouverture (17) de la rainure (18), servent à la fixation d'une bobine inductrice (9) entourée de bandages.

3. Moteur série alimenté en courant alternatif selon la revendication 1, caractérisé en ce que pour obtenir un freinage efficace, le champ transversal (15) de l'induit (4) est orienté vers la région de la zone (5) géométriquement neutre du paquet polaire.

4. Moteur série alimenté en courant alternatif selon l'une des revendications 1 à 3, caractérisé en ce que pour l'orientation du champ transversal (15) dans la région de la zone (5) géométriquement neutre du paquet polaire, le nombre de spires de la bobine inductrice (9) et de la bobine inductrice supplémentaire (10) est tel qu'une bonne commutation soit garantie en mode moteur comme en mode freinage.

5. Moteur série alimenté en courant alternatif selon l'une des revendications 1 à 4, caractérisé en ce que le paquet polaire du stator est en deux parties en étant séparé dans une région (16) comprise entre la première pièce polaire (8) et la deuxième pièce polaire (13), de sorte que les deux parties du paquet polaire peuvent être assemblées après intégration de la bobine inductrice supplémentaire (9).

6. Moteur série alimenté en courant alternatif selon l'une des revendications 1 à 4, caractérisé en ce que le paquet polaire du stator est en deux parties, en étant séparé dans une région (16') de la zone (5) géométriquement neutre, de sorte que les deux parties du paquet polaire peuvent être assemblées après mise en place de la bobine inductrice (9) entourée de bandages et de la bobine inductrice supplémentaire (10).

7. Moteur série alimenté en courant alternatif selon l'une des revendications 1 à 6, caractérisé en ce que la bobine inductrice supplémentaire (10) est reliée à l'induit (4) par un pont de court-circuit (21) et un fusible (22), en un circuit fermé.
